(19) Europäisches Patentamt
European Patent Office
Office européen des brevets

(11) Veröffentlichungsnummer: **0 009 080**
**B1**

(12) # EUROPÄISCHE PATENTSCHRIFT

(45) Veröffentlichungstag der Patentschrift: **23.06.82**

(51) Int. Cl.$^3$: **C 23 F 11/08**

(21) Anmeldenummer: **79102325.2**

(22) Anmeldetag: **09.07.79**

(54) **Korrosionsinhibitoren; Gemische zum Schützen von eisenhaltigen Metallen und die geschützten Metalle.**

(30) Priorität: **19.07.78 GB 3041978**

(43) Veröffentlichungstag der Anmeldung:
**02.04.80 Patentblatt 80/7**

(45) Bekanntmachung des Hinweises auf die Patenterteilung:
**23.06.82 Patentblatt 82/25**

(84) Benannte Vertragsstaaten:
**BE DE FR GB IT NL SE**

(56) Entgegenhaltungen:
**DE - A - 2 217 692**
**DE - A - 2 259 954**
**DE - A - 2 632 774**
**DE - A - 2 749 719**
**GB - A - 1 458 235**
**US - A - 3 960 576**

(73) Patentinhaber: **CIBA-GEIGY AG**
**Patentabteilung Postfach**
**CH-4002 Basel (CH)**

(72) Erfinder: **Marshall, Alan, Dr.**
**24, Newquay Drive Broken Cross**
**Macclesfield, Cheshire (GB)**
Erfinder: **Richardson, Norman**
**21, Grey Street**
**Middleton, Manchester (GB)**

**EP 0 009 080 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Korrosionsinhibitoren; Gemische zum Schützen von eisenhaltigen Metallen und die geschützten Metalle

Die vorliegende Erfindung betrifft neue chemische Stoffgemische, insbesondere neue Korrosionsinhibitoren und deren Verwendung zur Behandlung von wässrigen Systemen die mit eisenhaltigen Metallen in Berührung kommen.

In der GB - A - 1 458 235 wird eine Methode zur Verhinderung des Ausfällens von Kesselstein bzw. der Ablagerungen verursachenden Calcium-, Magnesium-, Barium- und Strontiumsalze aus wässrigen Systemen über einen weiten Temperaturbereich beschrieben. Gemäss dieser Methode wird das wässrige System mit einem geringen Anteil eines Produktes versetzt, das eine telomere Verbindung der Formel I

$$R-\underset{R'}{\underset{|}{\overset{O}{\overset{\|}{P}}}}-(CH_2\underset{CO_2H}{\underset{|}{CR''}})_{n}CH_2CHR''CO_2H \qquad I$$

und Salze davon umfasst, worin R'' Wasserstoff oder eine Methyl- oder Aethylgruppe ist, R Wasserstoff, eine gerade oder verzweigte Alkylgruppe mit 1 bis 18 Kohlenstoffatomen, eine Cycloalkylgruppe mit 5 bis 12 Kohlenstoffatomen, eine Arylgruppe, eine Aralkylgruppe, ein Rest der Formel

$$-(CH_2\underset{CO_2H}{\underset{|}{CR''}})_{m}CH_2CHR''CO_2H$$

worin R'' seine vorstehende Bedeutung aufweist und die Summe von n + m eine ganze Zahl von höchstens 100 ist, oder ein Rest —OX, worin X Wasserstoff oder eine gerade oder verzweigte Alkylgruppe mit 1 bis 4 Kohlenstoffatomen darstellt, ist, und R' ein Rest —OX ist, worin X die vorstehende Bedeutung aufweist.

Die zuvor genannte GB—A 1 458 235 beschreibt auch die Kombination von Verbindungen der Formel I mit Korrosionsinhibitoren, wie Cyclohexylamin, Morpholin, Distearylamin/Aethylenoxid-Kondensationsprodukte oder Stearylamin.

Es wurde nun gefunden, dass Stoffgemische aus einer telomeren Verbindung der Formel I und bestimmten spezifischen Korrosionsinhibitoren eine ausgezeichnete synergistische Korrosionsinhibierende Wirkung für eisenhaltige Metalle, die mit wässrigen Systemen in Berührung stehen, besitzen.

Die vorliegende Erfindung betrifft demgemäss ein Stoffgemisch zur Verhinderung der Korrosion von eisenhaltigen Metallen in Berührung mit wässrigen Systemen, das dadurch gekennzeichnet ist, dass es

a) eine telomere Verbindung der Formel (I)

$$R-\underset{R'}{\underset{|}{\overset{O}{\overset{\|}{P}}}}-(CH_2\underset{CO_2H}{\underset{|}{CR''}})_{n}CH_2CHR''CO_2H \qquad (I)$$

und Salze davon umfasst, worin R'' Wasserstoff oder eine Methyl- oder Aethylgruppe ist, R Wasserstoff, eine gerade oder verzweigte Alkylgruppe mit 1 bis 18 Kohlenstoffatomen, eine Cycloalkylgruppe mit 5 bis 12 Kohlenstoffatomen, eine Arylgruppe, eine Aralkylgruppe, ein Rest der Formel

$$-(CH_2\underset{CO_2H}{\underset{|}{CR''}})_{m}CH_2CHR''CO_2H$$

worin R'' seine vorstehende Bedeutung aufweist und die Summe von n + m eine ganze Zahl von höchstens 100 ist, oder ein Rest —OX, worin X eine gerade oder verzweigte Alkylgruppe mit 1 bis 4 Kohlenstoffatomen darstellt, ist, und R' ein Rest —OX ist, worin X die obige Bedeutung hat oder Wasserstoff bedeuten und

b) eine oder mehrere Verbindungen aus der Gruppe

1. Zinksalze, 2. Polyphosphate, 3. Silikate, 4. Molybdate enthält, mit der Massgabe, dass im Falle von b = Zinksalz das Verhältnis von a:b 40—85 Gew.-Prozent zu 60—15 Gew.-Prozent, im Falle von b = Polyphosphate a:b 10—70 Gew.-Prozent zu 90—30 Gew.-Prozent und im Falle von b = Metasilikat oder Molybdat a:b jeweils ca. 50 Gew.-Prozent zu 50 Gew.-Prozent ist.

Salze der telomeren Verbindungen der Formel (I) sind Verbindungen, worin einige oder die gesamten

sauren Wasserstoffe in den sauren Verbindungen der Formel (I) durch Alkalimetall- oder Erdalkalimetall-Ionen, Ammonium-Ionen oder quaternisierte Aminreste ersetzt sind.

Diese Salze weisen auch eine gute Wirksamkeit zur Verhinderung der Korrosion von Metallteilen in wässrigen Systemen, wie Kühlsysteme für die Decyclisierung von Wasser und hydrostatische Sterilisation, auf.

Vorzugsweise ist R'' Wasserstoff, und bevorzugt ist die Summe von m und n gleich 0 oder eine ganze Zahl bis zu 60.

Vorzugsweise ist R Wasserstoff oder ein Rest der Formel

$$-(CH_2\underset{\displaystyle CO_2H}{\underset{|}{C}}R'')_m-CH_2CHR''CO_2H,$$

worin R'' Wasserstoff darstellt, m eine ganze Zahl von 0—30 ist und R' einen Rest —OX bedeutet, worin X Wasserstoff ist und n eine ganze Zahl von 0—30 ist.

Beispiele für Basen, mit denen Verbindungen der Formel (I) umgesetzt werden können, um teilweise oder vollständig Salze zu bilden, sind die Hydroxide und Carbonate von Natrium, Kalium und Ammonium. Gleichermassen können organische Basen verwendet werden; beispielsweise primäre, sekundäre und tertiäre Alkyl- und substituierte Alkylamine, in denen die Gesamtkohlenstoffanzahl 12 nicht überschreitet, wie Triäthanolamin.

Die Verbindungen der Formel (I) sind nicht neu. Die Verbindungen und das Verfahren zu ihrer Herstellung sind in der US-A-2 957 931 beschreiben.

So können die Verbindungen der Formel (I) in zweckmässiger Weise durch Umsetzung unterschiedlicher molarer Mengen der Formel

$$CH_2{=}CR''-CO_2H \qquad (II)$$

worin R'' die vorstehende Bedeutung aufweist, mit einer Verbindung der Formel

$$R-\overset{\displaystyle O}{\overset{\|}{\underset{\underset{\displaystyle R'}{|}}{P}}}-H \qquad (III)$$

hergestellt werden, worin R' die vorstehend aufgezeigte Bedeutung besitzt und R Wasserstoff, eine gerad- oder verzweigtkettige Alkylgruppe mit 1 bis 18 Kohlenstoffatomen, eine Cycloalkylgruppe mit 5 bis 12 Kohlenstoffatomen, eine Arylgruppe, eine Aralkylgruppe oder —OX ist, worin X die vorstehend genannte Bedeutung besitzt.

Alternativ kann ein Salz der Verbindung der Formel (III) verwendet werden, in dem die sauren Wasserstoffe teilweise oder völlig durch Kationen ersetzt wurden, die sich von den vorstehend beschriebenen salzbildenden Basen ableiten.

Die Umsetzung wird in einem unter den Reaktionsbedingungen inerten Lösungsmittel und in Anwesenheit eines Reaktionsinitiators durchgeführt.

Die Reaktionstemperaturen betragen z.B 65 bis 100°C, vorzugsweise 75 bis 100°C. Geeignete Reaktionslösungsmittel sind beispielsweise Wasser, wässriges Aethanol oder Dioxan. Geeignete Reaktionsinitiatoren umfassen Materialien, die sich unter den Reaktionsbedingungen unter Bildung freier Radikale zersetzen. Beispiele für solche Materialien sind Azobisisobutyronitril, organische Peroxide, wie Benzoylperoxid, Methyläthylketonperoxid, Di-tert.-butylperoxid und Monobutylhydroperoxid, und Oxidationsmittel, wie Wasserstoffperoxid, Natriumperborat und Natriumpersulfat.

Die Reaktionsprodukte fallen bei diesem Verfahren in Form von Lösungen an. Diese können einer teilweisen oder vollständigen Verdampfung unter vermindertem Druck unterzogen werden. Die nichtgereinigten Reaktionsprodukte können als telomere Produkte in den erfindungsgemässen Stoffgemischen eingesetzt werden. Die Reaktionsprodukte können auch gereinigt werden. Die Reinigung kann wie folgt durchgeführt werden:

i) durch Verdampfen des Reaktionslösungsmittels, Auflösen des Rückstandes in Wasser, Waschen mit einem mit Wasser nicht mischbaren organischen Lösungsmittel z.B. Aether, und Verdampfen der wässrigen Lösung,

ii) durch Verdampfen des Reaktionslösungsmittels, Auflösen des Rückstands in Methanol, Filtrieren und Wiederausfällen, z.B. durch Zusatz von Aether.

Salze der Verbindungen der Formel (I), in denen einige oder alle der sauren Wasserstoffatome der Verbindungen der Formel (I) durch Kationen ersetzt wurden, die sich von den vorstehend definierten salzbildenden Basen ableiten, können durch Vermischen einer wässrigen oder alkoholischen Lösung der Verbindung der Formel (I) mit einer wässrigen oder alkoholischen Lösung hergestellt werden, welche die benötigte Base im Ueberschuss, in stöchiometrischen Mengen oder im Unterschuss enthält. Das Lösungsmittel kann anschliessend durch Verdampfen entfernt werden. In vielen wässrigen Systemen, in denen die erfindungsgemässen Inhibitoren verwendet werden können, ist das Wasser ausreichend alkalisch, um die Neutralisation zu bewirken, und es muss daher lediglich das erfindungsgemässe Produkt zugesetzt werden.

Die genaue Natur der Reaktionsprodukte dieses Herstellungsverfahrens ist nicht gänzlich geklärt. Die Untersuchung mittels kernmagnetischer Resonanz hat jedoch gezeigt, dass das Reaktionsprodukt des vorstehend beschriebenen Verfahrens zusätzlich zu nichtreagierter Verbindung der Formel (III) und Polymerisationsprodukten von Verbindungen der Formel (II), eine Verbindung der Formel (I), wie vorstehend definiert, enthält.

Besteht die Komponente b) ganz oder teilweise aus Zinksalzen, so kommen an sich beliebige wasserlösliche Zinksalze, wie Zinkborat, -chlorid, -nitrat oder -sulphat, in Frage. In analoger Weise können in den erfindungsgemässen Gemischen an sich beliebige wasserlösliche Polyphosphate, Silikate und Molybdate verwendet werden, z.B. deren Alkalimetallsalze, insbesondere Natrium- und Kaliumsalze. Das Korrosionsinhibitorengemisch wird den wässrigen Systemen vorzugsweise in Mengen von 0,1 bis 500 ppm (parts per million), besonders bevorzugt 1 bis 200 ppm zugesetzt.

Wird ein Zinksalz allein als Komponente b) verwendet, so beträgt das Verhältnis von a) zu b) bevorzugt 40—85 Gew.-% zu 60—15 Gew.-%, insbesondere 80 zu 20 Gew.-%.

Werden ausschliesslich Polyphosphate als Komponente b) verwendet, so ist das Verhältnis von a) zu b) vorzugsweise 10—70 Gew.-% zu 90—30 Gew.-%, insbesondere 40 Gew.-% zu 60 Gew-%.

Das erfindungsgemässe Inhibitor-Stoffgemisch kann in das zu behandelnde wässrige System zusammen mit anderen Verbindungen eingebracht werden, wie Dispergier- und/oder keimwachstumsverhindernde Mittel ("Threshold"-Mittel) und/oder Entschäumungsmittel, z.B. polymerisierte Acrylsäure und ihre Salze, hydrolysiertes Polyacrylnitril, polymerisierte Methacrylsäure und ihre Salze, Polyacrylamid und Copolymere davon aus Acryl- und Methacrylsäuren, Ligninsulfonsäure und ihre Salze, Tannin, Naphthalinsulfonsäure/Formaldehyd-Kondensationsprodukte, Stärke und ihre Derivate und Cellulose. Spezielle Thresholdmittel, wie beispielsweise hydrolysiertes Polymaleinsäureanhydrid und seine Salze, Alkylphosphonsäuren, 1-Aminoalkyl- 1,1-Diphosphonsäuren und ihre Salze und Alkalimetallphosphate, können auch verwendet werden.

Als Entschäumungsmittel kommen z.B. Distearylsebacinsäureamid, Distearyladipinsäureamid und verwandte Aethylenoxid-Kondensationsprodukte sowie Fettalkohole, wie Caprylalkohol und dessen Aethylenoxid-Kondensationsprodukte, und Aethylenoxid/Propylenoxid-copolymere in Betracht.

Die vorliegende Erfindung betrifft ferner ein Verfahren zur Verhinderung der Korrosion von eisenhaltigen Metallen, welche mit wässrigen Systemen in Berührung stehen, dadurch gekennzeichnet, indem man dem wässrigen System geringe Mengen eines erfindungsgemässen Gemischs zufügt.

Die folgenden Beispiele dienen zur Erläuterung der Erfindung. Die Beispiele A—E beschreiben die Herstellung verschiedener Verbindungen der Formel (I) enthaltender Produkte. Die Beispiele 1—8 illustrieren deren Verwendung als Korrosionsinhibitoren. Prozente sind Gewichtsprozente.

### Beispiel A

*Umsetzung von Acrylsäure mit Natriumhypophosphit in einem Molverhältnis von 2:1*

Zu einer Lösung aus 44 g (0,5 Mol) Natriumhypophosphit in 100 g Wasser wird während 2 1/2 Stunden bei 75°C eine Lösung aus 14,4 g (0,1 Mol) Natriumpersulfat in 100 g Wasser zugetropft. 5 Minuten nach Beginn der Natriumpersulfat-Zugabe führt man während 2 Stunden 72 g (1 Mol) Acrylsäure zu. Anschliessend wird das Reaktionsgemisch auf 85°C erwärmt und 2 Stunden bei dieser Temperatur gehalten. Es entsteht eine wässrige Lösung mit 25,2%. Feststoff-Gehalt.

Eine Probe des Telomeren wird isoliert, indem man 100 g der Lösung zur Trockne eindampft. Der Rückstand wird mit 200 ml heissem Methanol behandelt und abfiltriert, um nicht umgesetztes Natriumhypophosphit und zersetztes Natriumpersulfat zu entfernen. Das Filtrat wird auf 100 ml eingeengt, und das Telomer wird durch Zugabe von 1 Liter Diäthyläther ausgefällt. Nach dem Trocknen im Vakuum bei 50°C erhält man das Telomere der Formel (I). Das Produkt hat einen Phosphorgehalt von 12,7% und ein mittleres Molekulargewicht von 440. Letzteres wurde osmometrisch in Wasser bestimmt.

### Beispiel B

*Umsetzung von Acrylsäure mit Natriumhypophosphit in einem Molverhältnis von 4:1.*

Das Telomer wird nach der im Beispiel A beschriebenen Methode hergestellt, mit dem Unterschied, dass anstelle von 72 g nun 144 g (2,0 Mol) Acrylsäure verwendet werden. Man isoliert das Telomer der Formel (I) auf die beschriebene Weise. Es enthält 8,0% Phosphor und hat gemäss osmometrischer Bestimmung ein mittleres Molekulargewicht von 665.

### Beispiel C

*Umsetzung von Acrylsäure mit Natriumhypophosphit in einem Molverhältnis von 6:1.*

Man verfährt wie im Beispiel A, verwendet jedoch 216 g (3,0 Mol) Acrylsäure anstelle von 72 g und 21,6 g (0,16 Mol) Natriumpersulfat anstelle von 14,4 g.

Das isolierte Telomer der Formel (I) hat ein mittleres Molekulargewicht von 696, (osmometrisch in Wasser bestimmt) und enthält 5,2% Phosphor.

Beispiel D

*Umsetzung von Acrylsäure mit Natriumhypophosphit in einem Molverhältnis von 8:1.*

Man verfährt wie im Beispiel A, verwendet jedoch 288 g (4,0 Mol) Acrylsäure anstelle von 72 g und 28,8 g (0,2 Mol) Natriumpersulfat anstelle von 14,4 g.

Das isolierte Telomer der Formel (I) hat ein mittleres Molekulargewicht von 750, (osmometrisch in Wasser bestimmt) und enthält 4,9% Phosphor.

Beispiel E

*Umsetzung von Acrylsäure mit Natriumhypophosphit in einem Molverhältnis 16:1.*

Man verfährt wie im Beispiel A, verwendet jedoch 576 g (8,0 Mol) Acrylsäure anstelle von 72 g und 56,4 g (0,4 Mol) Natriumpersulfat anstelle von 14,4 kg.

Das entstandene Telomer der Formel (I) hat ein mittleres Molekulargewicht von 1130 (osmometrisch in Wasser bestimmt) und enthält 2,0% Phosphor.

Beispiele 1—8

*Korrosionsinhibierende Wirkung der Produkte gemäss Beispiel A—E*

Die Korrosionsinhibierende Wirkung der Produkte gemäss Beispielen A—E wird durch Tauchversuch in kohlensauer Lösung geprüft, indem man korrodierendes Wasser der folgenden Zusammensetzung als Prüfflüssigkeit verwendet:

| | |
|---|---|
| 20 g | $CaSO_4 \cdot 2H_2O$ |
| 15 g | $MgSO_4 \cdot 7H_2O$ |
| 4,6 g | $NaH\ CO_3$ |
| 7,7 g | $CaCl_2 \cdot 6H_2O$ |
| 170 l | destilliertes Wasser. |

5 x 1,5 cm grosse Probestücke aus Weichstahl werden mit Bimsstein geschrubbt, für eine Minute in Salzsäure getaucht, anschliessend gespült, getrocknet und gewogen.

Die gewünschte Menge des Inhibitor-Gemisches wird in 100 ml Prüfflüssigkeit gelöst und zusammen mit dem Probestück in ein Glasgefäss gegeben, das man in einen auf 40°C regulierten Thermostaten stellt. Während der Lagerung führt man mit einer Durchflussgeschwingdigkeit von 500 ml/-Minute Luft durch die Prüfflüssigkeit. Der Luftstrom wird so geführt, dass das Probestück nicht direkt mit der Luft in Berührung kommt. Verdampftes Wasser wird kontinuierlich mit destilliertem Wasser ersetzt.

Nach 48 Stunden wird das Probestück entfernt, mit Bimsstein abgerieben, während 1 Minute in Salzsäure getaucht, welche 1% Hexamethylentetramin als Inhibitor enthält, gespült, getrocknet und erneut gewogen. Dabei tritt ein gewisser Gewichtsverlust ein. Zusammen mit jeder Versuchsreihe wird ein Blindversuch durchgeführt, indem man ein Probestück aus Weichstahl ohne Korrosionsinhibitoren in die Probeflüssigkeit eintaucht. Der Korrosionsverlust wird in Milligramm Gewichtsverlust pro $dm^2$ pro Tag (m.d.T.) errechnet. Einfachheitshalber werden aber die Ergebnisse in Prozent der Inhibitorwirkung angegeben, gemäss folgender Gleichung:

$$\%\ \text{Inhibitorwirkung} = \frac{\begin{matrix}\text{Korrosionsverlust} \\ \text{der Blindprobe} \\ \text{(in m.d.T.)}\end{matrix} - \begin{matrix}\text{Korrosionsverlust} \\ \text{der Probe} \\ \text{(in m.d.T.)}\end{matrix}}{\begin{matrix}\text{Korrosionsverlust} \\ \text{der Blindprobe} \\ \text{(in m.d.T.)}\end{matrix}} \times 100$$

Es werden die folgenden Zusammensetzungen geprüft und die Ergebnisse in der Tabelle I zusammengefasst:

a) 100 ppm der Produkte gemäss Beispielen A—E allein,
b) 50 ppm der Produkte gemäss Beispielen A—E und 50 ppm Polyphosphat,
c) 50 ppm der Produkte gemäss Beispielen A—E und 50 ppm eines wasserlöslichen Zinksalzes,
d) 50 ppm des Produkts gemäss Beispiel B und 50 ppm Metasilikat,
e) 50 ppm des Produkts gemäss Beispiel B und 50 ppm Molybdat.

| Beispiel | Produkt gemäss | % Schutzwirkung (Inhibitorwirkung) | | | | |
|---|---|---|---|---|---|---|
| | | 100 ppm allein | 50 ppm Zusatzstoff + 50 ppm $Zn^{II}$ | 50 ppm Zusatzstoff + 50 ppm Polyphosphat | 50 ppm Zusatzstoff + 50 ppm Metasilicat | 50 ppm Zusatzstoff + 50 ppm Molybdat |
| 1 | Beispiel A | 15 | – | 95 | – | – |
| 2 | Beispiel B | 38 | 98 | 98 | 96 | 98 |
| 3 | Beispiel C | 40 | 85 | 93 | – | – |
| 4 | Beispiel D | 38 | 93 | 91 | – | – |
| 5 | Beispiel E | 43 | 88 | 92 | – | – |

Zu analogen Ergebnissen kommt man, wenn man die Produkte gemäss Beispielen A—K von der GB—PS 1 458 235 einsetzt.

Beispiel 6

Die Ergebnisse des Tauchversuches mit 0—100 ppm der Beispiele B—D im Gemisch mit 100—0 ppm wasserlöslichem Zinksalz sind aus Figur 1 ersichtlich.

Beispiel 7

Die gleiche Versuchsreihe wie im Beispiel 6 wird durchgeführt, jedoch mit Natriumhexametaphosphat anstelle von Zinksalz. Die Ergebnisse sind aus Figur 2 ersichtlich.

Beispiel 8

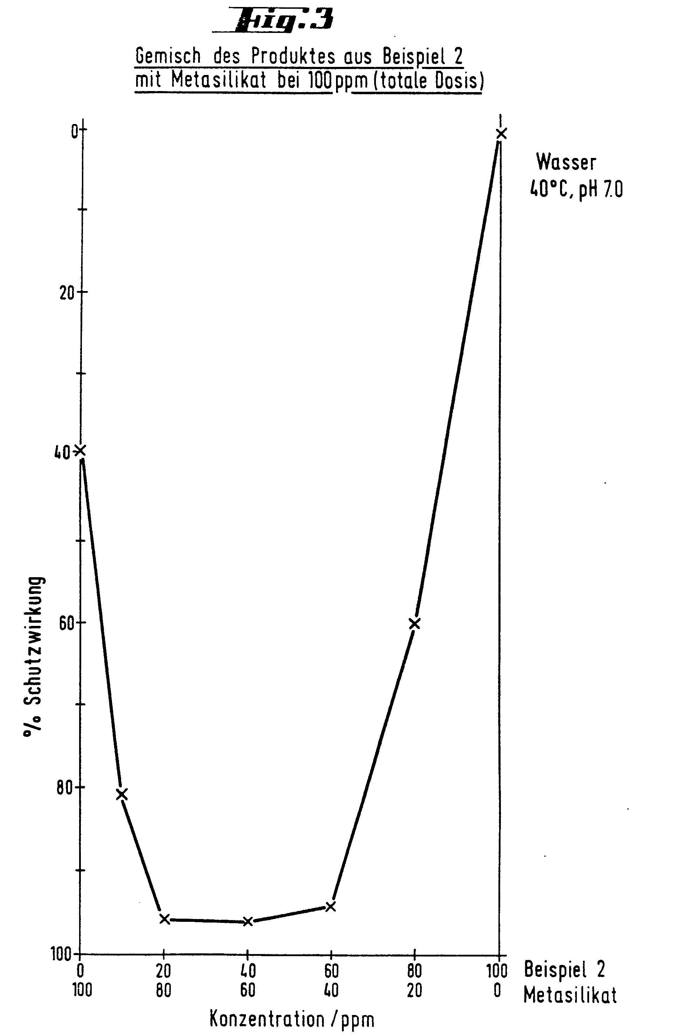

Man verwendet in der gleichen Versuchsreihe wie im Beispiel 6, jedoch 0—100 ppm Produkt aus Beispiel B und 100—0 ppm Natriummetasilikat. Die Ergebnisse sind aus Figur 3 ersichtlich.

Die ergebnisse der Beispiele 6—8 zeigen eindeutig den Synergismus zwischen den Verbindungen der Formel I und den spezifischen Salzen.

**Patentansprüche**

1. Ein Stoffgemisch zur Vehinderung der Korrosion von eisenhaltigen Metallen in Berührung mit wässrigen Systemen, das dadurch gekennzeichnet ist, dass es

a) eine telomere Verbindung der Formel (I)

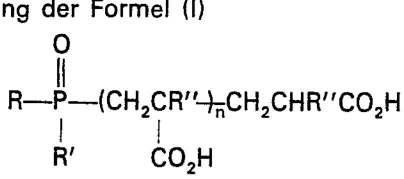

(I)

und Salze davon umfasst, worin R″ Wasserstoff oder eine Methyl- oder Aethylgruppe ist, R Wasserstoff, eine gerade oder verzweigte Alkylgruppe mit 1 bis 18 Kohlenstoffatomen, eine Cycloalkylgruppe mit 5 bis 12 Kohlenstoffatomen, eine Arylgruppe, eine Aralkylgruppe, ein Rest der Formel

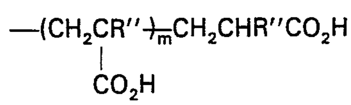

worin R″ seine vorstehende Bedeutung aufweist und die Summe von n + m eine ganze Zahl von höchstens 100 ist, oder ein Rest —OX, worin X eine gerade oder verzweigte Alkylgruppe mit 1 bis 4 Kohlenstoffatomen darstellt, ist, und R′ ein Rest —OX ist, worin X obige Bedeutung hat oder Wasserstoff bedeutet und

b) eine oder mehrere Verbindungen aus der Gruppe 1. Zinksalze, 2. Polyphosphate, 3. Silikate, 4. Molybdate enthält, mit der Massgabe, dass im Falle von b = Zinksalz das Verhältnis von a:b 40—85 Gew.-Prozent zu 60—15 Gew.-Prozent, im Falle von b = Polyphosphate a:b 10—70 Gew.-Prozent zu 90—30 Gew.-Prozent und im Falle von b = Metesilikat oder Molybdat a:b jeweils ca. 50 Gew.-Prozent zu 50 Gew.-Prozent ist.

2. Ein Stoffgemisch gemäss Anspruch 1, worin in der Formel (I) R″ Wasserstoff ist und die Summe von n und m eine ganze Zahl bis zu 60 ist.

3. Ein Stoffgemisch gemäss Anspruch 1, worin in der Formel (I) R Wasserstoff oder ein Rest der Formel

$$-(CH_2\underset{\substack{|\\ CO_2H}}{C}R''\!)_m CH_2CHR''CO_2H \quad \text{ist,}$$

worin R'' Wasserstoff darstellt, m eine ganze Zahl von 0—30 ist und R' einen Rest —OX bedeutet, worin X Wasserstoff ist und n eine ganze Zahl von 0—30 ist.

4. Ein Stoffgemisch gemäss Anspruch 1, worin die Komponente b) Zinkborat, -chlorid, -nitrat oder -sulfat ist.

5. Ein Stoffgemisch gemäss Anspruch 1, worin die Komponente b) ein wasserlösliches Polyphosphat, Silikat oder Molybdat ist.

6. Ein Stoffgemisch gemäss Anspruch 5, worin das wasserlösliche Salz ein Alkalimetallsalz ist.

7. Ein Stoffgemisch gemäss Anspruch 1, worin die Komponente b) ausschliesslich aus einem Zinksalz besteht und das Verhältnis von Komponente a) zu Komponente b) 40—85 Gew.-Prozent zu 60—15 Gew.-Prozent beträgt, oder worin die Komponente b) ausschliesslich aus einem Polyphosphat besteht und das Verhältnis von Komponente a) zu Komponente b) 10—70 Gew.-Prozent zu 90—30 Gew.-Prozent beträgt.

8. Ein Stoffgemisch gemäss Anspruch 7, dadurch gekennzeichnet, dass es aus Komponente a) und aus 20 Gew.-% eines Zinksalzes oder aus 60 Gew.-% eines Polyphosphats besteht.

9. Ein Verfahren zur Verhinderung der Korrosion von eisenhaltigen Metallen, die mit wässrigen Systemen in Berührung stehen, dadurch gekennzeichnet, dass man dem wässrigen System 0,1 ppm bis 500 ppm, vorzugsweise 1 ppm bis 200 ppm, eines Stoffgemisches gemäss den Ansprüchen 1 bis 8 zugibt.

10. Ein eisenhaltiges Metall, dadurch gekennzeichnet, dass es durch das Verfahren gemäss Anspruch 9 gegen Korrosion geschützt ist.

**Claims**

1. A composition for the prevention of corrosion of ferrous metals in contact with aqueous systems, which composition comprises
a) a telomeric compound of the formula I

$$R-\underset{\substack{|\\ R'}}{\overset{\substack{O\\ \|}}{P}}-(CH_2\underset{\substack{|\\ CO_2H}}{C}R''\!)_n CH_2CHR''CO_2H \qquad (I)$$

and salts thereof,
wherein R'' is hydrogen or a methyl or ethyl group, R is hydrogen, a straight-chain or branched-chain alkyl group having 1 to 18 carbon atoms, a cycloalkyl group having 5 to 12 carbon atoms, an aryl group, an aralkyl group, a group of the formula

$$-(CH_2\underset{\substack{|\\ CO_2H}}{C}R''\!)_m CH_2CHR''CO_2H$$

wherein R'' has the meaning defined above, and the sum of n + m is an integer of at most 100, or a group —OX wherein X is a straight-chain or branched-chain alkyl group having 1 to 4 carbon atoms, and R' is a group —OX wherein X has the meaning defined above or is hydrogen, and
b) one or more compounds selected from the group:
(i) zinc salts, (ii) polyphosphates, (iii) silicates and (iv) molybdates, with the proviso that in the case where b) is a zinc salt, the ratio of a:b is 40—85 per cent by weight to 60—15 per cent by weight, where b) is a polyphosphate, the ratio of a:b is 10—70 per cent by weight to 90—30 per cent by weight, and where b) is silicate or molybdate, the ratio of a:b is in each case about 50 per cent by weight to 50 per cent by weight.

2. A composition according to Claim 1, wherein, in the formula I, R'' is hydrogen, and the sum of n and m is an integer up to 60.

3. A composition according to Claim 1, wherein, in the formula I, R is hydrogen, or a group of the formula

$$-(CH_2\underset{\displaystyle CO_2H}{\underset{|}{C}}R'')_m CH_2CHR''CO_2H$$

wherein R'' is hydrogen, m is an integer from 0—30, and R' is a group —OX wherein X is hydrogen, and n is an integer from 0—30.

4. A composition according to Claim 1, wherein the component b) is zinc borate, zinc chloride, zinc nitrate or zinc sulfate.

5. A composition according to Claim 1, wherein the component b) is a water-soluble polyphosphate, silicate or molybdate.

6. A composition according to Claim 5, wherein the water-soluble salt is an alkali metal salt.

7. A composition according to Claim 1, wherein the component b) consists exclusively of a zinc salt, and the ratio of component a) to component b) is 40—85 per cent by weight to 60—15 per cent by weight, or wherein the component b) consists exclusively of a polyphosphate, and the ratio of component a) to component b) is 10—70 per cent by weight to 90—30 per cent by weight.

8. A composition according to Claim 7, wherein the component b) consists exclusively of 20 per cent by weight of a zinc salt, or of 60 per cent by weight of a polyphosphate.

9. A process for the prevention of corrosion of ferrous metals in contact with aqueous systems, which process comprises adding to the aqueous system 0.1 ppm to 500 ppm, preferably 1 ppm to 200 ppm, of a composition according to Claims 1 to 8.

10. A ferrous metal which is protected against corrosion by means of the process according to Claim 9.

**Revendications**

1. Mélange pour inhiber la corrosion de métaux à base de fer entrant en contact avec des systèmes aqueux, mélange caractérisé en ce qu'il comprend:
a) un composé télomère répondant à la formule I

$$R-\overset{\displaystyle O}{\overset{\|}{\underset{\displaystyle R'}{\underset{|}{P}}}}-(CH_2\underset{\displaystyle CO_2H}{\underset{|}{C}}R'')_n CH_2CHR''CO_2H \qquad (I)$$

dans laquelle R'' représente l'hydrogène ou un radical méthyle ou éthyle, R représente l'hydrogène, un radical alkyle, linéaire ou ramifié, contenant de 1 à 18 atomes de carbone, un radical cycloalkyle contenant de 5 à 12 atomes de carbone, un radical aryle, un radical aralkyle, un radical répondant à la formule

$$-(CH_2\underset{\displaystyle CO_2H}{\underset{|}{C}}R'')_m CH_2CHR''CO_2H$$

(dans laquelle R'' a la signification précédemment donnée), la somme n + m étant un nombre entier au plus égal à 100, un radical —OX dans lequel X représente un radical alkyle, linéaire ou ramifié, contenant de 1 à 4 atomes de carbone, et R' représente un radical —OX dans lequel X a la signification qui vient d'être donnée ou représente l'hydrogène, ou un sel d'un tel composé télomère, et
b) un ou plusieurs composés pris dans l'ensemble constitués par 1. des sels de zinc, 2. des polyphosphates, 3. des silicates et 4. des molybdates, avec la condition que, dans le cas où b est un sel de zinc, le rapport a:b soit de 40:85% en poids à 60—15% en poids, dans le cas où b est un polyphosphate le rapport a:b soit de 10—70% en poids à 90—30% en poids et, dans le cas où b est un métasilicate ou un molybdate, le rapport a:b soit d'environ 50% en poids à 50% en poids.

2. Mélange selon la revendication 1, caractérisé en ce que, dans la formule I, R'' représente l'hydrogène et la somme n + m est un nombre entier au plus égal à 60.

3. Mélange selon la revendication 1, caractérisé en ce que, dans la formule I, R représente l'hydrogène ou un radical répondant à la formule:

$$-(CH_2\underset{\displaystyle CO_2H}{\underset{|}{C}}R'')_m CH_2CHR''CO_2H$$

dans laquelle R'' représente l'hydrogène, m est un nombre entier de 0 à 30 et R' représente un radical —OX dans lequel X représente l'hydrogène et n un nombre entier de 0 à 30.

4. Mélange selon la revendication 1 dans lequel la composante b) est le borate, le chlorure, le nitrate ou le sulfate de zinc.

5. Mélange selon la revendication 1 caractérisé en ce que la composante b) est un polyphosphate, un silicate ou un molybdate solubles dans l'eau.

6. Mélange selon la revendication 5 caractérisé en ce que le sel hydrosoluble est un sel de métal alcalin.

7. Mélange selon la revendication 1 caractérisé en ce que la composante b) est exclusivement constituée d'un sel de zinc, et le rapport de la composante a) à la composante b) est de 40—85% en poids à 60—15% en poids, ou la composante b) est exclusivement constituée d'un polyphosphate et le rapport de la composante a) à la composante b) est de 10—70% en poids à 90—30% en poids.

8. Mélange selon la revendication 7 caractérisé en ce que la composante b) consiste exclusivement en 20% en poids d'un sel de zinc ou en 60% en poids d'un polyphosphate.

9. Procédé pour inhiber la corrosion de métaux à base de fer qui entrenten contact avec des systèmes aqueux, procédé caractérisé en ce qu'on ajoute au système aqueux de 0,1 à 500 ppm, de préférence de 1 à 200 ppm, d'un mélange selon l'une quelconque des revendication 1 à 8.

10. Métal à base de fer caractérisé en ce qu'il est protégé contre la corrosion par le procédé de la revendication 9.

Fig. 1

Gemisch aus Telomer/ $Zn^{2+}$ geprüft bei 100 ppm (totale Dosis)

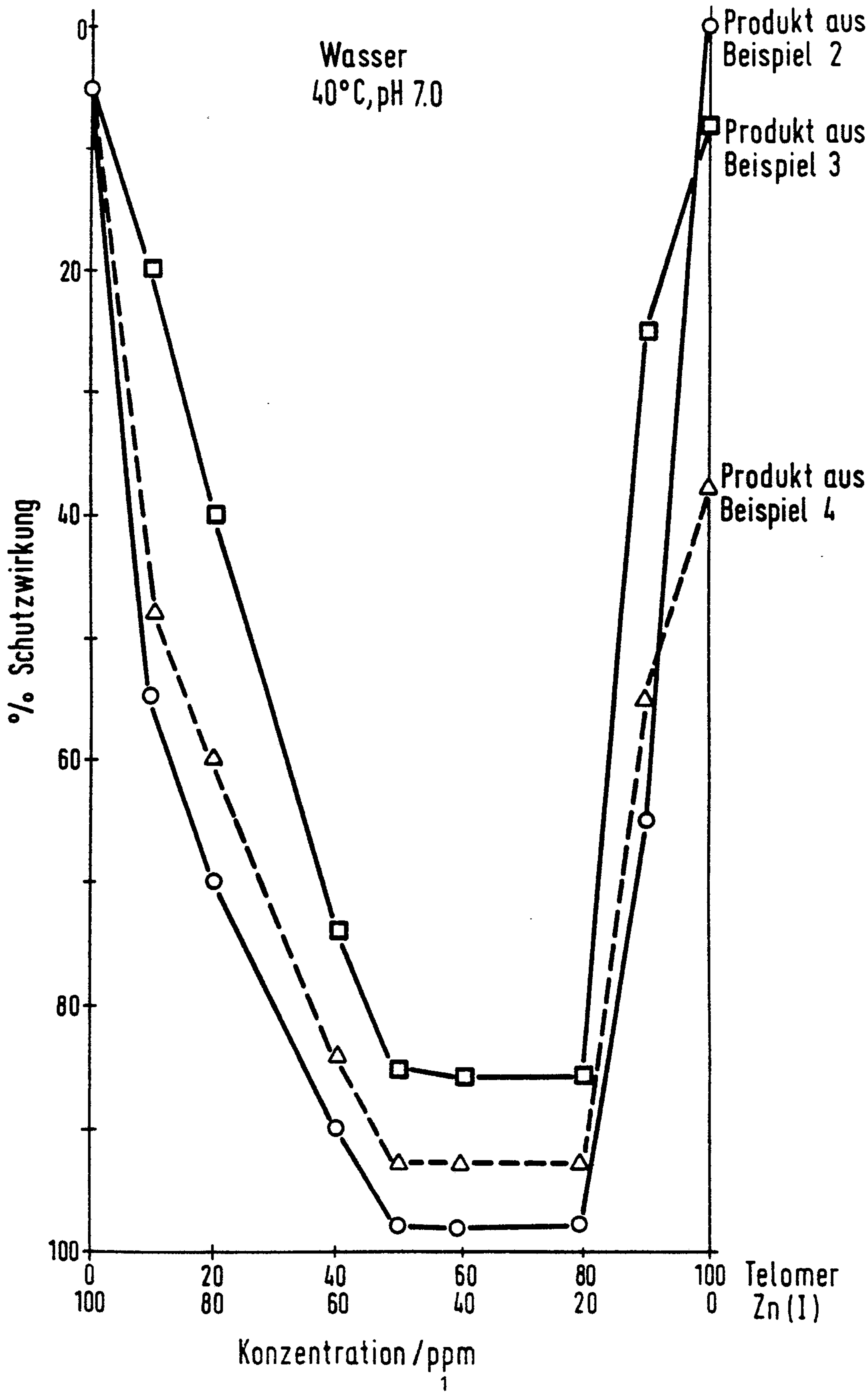

Fig. 2

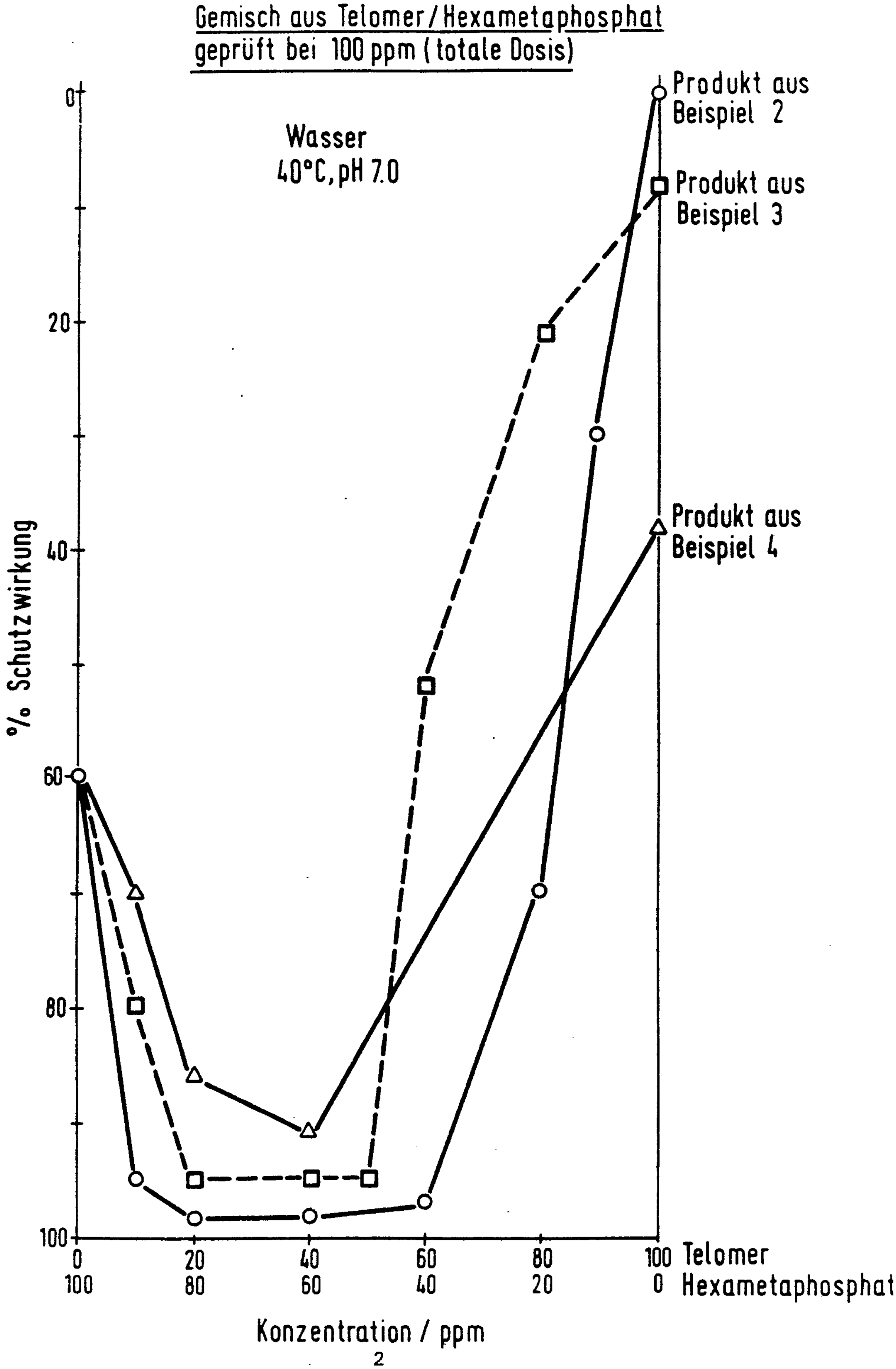
Gemisch aus Telomer/Hexametaphosphat
geprüft bei 100 ppm (totale Dosis)
Wasser
40°C, pH 7.0
Produkt aus Beispiel 2
Produkt aus Beispiel 3
Produkt aus Beispiel 4
% Schutzwirkung
0
20
40
60
80
100
0 20 40 60 80 100 Telomer
100 80 60 40 20 0 Hexametaphosphat
Konzentration / ppm

Fig. 3

Gemisch des Produktes aus Beispiel 2
mit Metasilikat bei 100 ppm (totale Dosis)